# EUROPÄISCHE PATENTSCHRIFT

(11) **EP 3 619 801 B1**
(45) Veröffentlichungstag und Bekanntmachung des Hinweises auf die Patenterteilung: **23.12.2020**
(21) Anmeldenummer: 18720240.3
(22) Anmeldetag: 25.04.2018
(51) Int. Cl.: H02M 1/32, H02M 7/5387

(54) **VERFAHREN ZUR ANSTEUERUNG EINES STROMRICHTERS, STEUERVORRICHTUNG FÜR EINEN STROMRICHTER UND STROMRICHTER**
METHOD FOR ACTUATING A CONVERTER, CONTROL APPARATUS FOR A CONVERTER, AND CONVERTER
PROCÉDÉ SERVANT À PILOTER UN CONVERTISSEUR, DISPOSITIF DE COMMANDE POUR UN CONVERTISSEUR, ET CONVERTISSEUR

(30) Priorität: 02.05.2017 DE 102017207300
(43) Veröffentlichungstag der Anmeldung: 11.03.2020
(73) Patentinhaber: Robert Bosch GmbH, 70442 Stuttgart (DE)
(72) Erfinder: MERKEL, Tino, 71701 Schwieberdingen (DE); MALCHOW, Florian, 70176 Stuttgart (DE); HIRSCH, Michele, 73730 Esslingen (DE)
(86) Internationale Anmeldenummer: PCT/EP2018/060610
(87) Internationale Veröffentlichungsnummer: WO 2018/202511

(56) Entgegenhaltungen:
- EP-A1- 2 833 529
- US-A- 5 068 777
- US-A- 5 699 240
- US-A1- 2011 241 587

## Beschreibung

Die vorliegende Erfindung betrifft ein Verfahren zur Ansteuerung eines Stromrichters, eine Steuervorrichtung für einen Stromrichter und einen Stromrichter. Insbesondere betrifft die vorliegende Erfindung die Ansteuerung eines Stromrichters zur Optimierung einer Temperaturverteilung in dem Stromrichter.

### Stand der Technik

Die Druckschrift DE 10 2007 018 829 A1 offenbart ein Verfahren und eine Vorrichtung zur Ansteuerung einer Leistungsschaltereinheit. Zum Schutz der Leistungsschaltereinheit gegen thermische Überbelastung wird eine Temperaturrichtgröße der Leistungsschaltereinheit erhoben, anhand des zeitlichen Verlaufs der Temperaturrichtgröße wird ein Temperaturhub während einer Betriebsphase der Leistungsschaltereinheit bestimmt und anschließend die Verlustleistung der Leistungsschaltereinheit derart limitiert, dass der Temperaturhub einen vorgegebenen Grenzwert nicht überschreitet.

Die Druckschrift US 2011/0241587 A1 offenbart einen Inverter zur Versorgung einer dreiphasigen elektrischen Maschine aus einer Gleichspannungsquelle, wobei die Leistungsschalter des Inverters der Phase, die momentan den höchsten Strom leitet, mit einer niedrigeren Schaltfrequenz angesteuert werden, als die Leistungsschalter der anderen Phaser Die Druckschrift US5068777 offenbart einen pulsbreitenmodulierten Stromrichter, worin die Temperatur eines Schaltelements erfasst wird, und die Trägerfrequenz abgesenkt wird, wenn die Temperatur ansteigt.

In elektrischen Antriebssystemen wird in der Regel eine elektrische Maschine von einem vorgeschalteten Stromrichter mit elektrischer Energie gespeist. Derartige Stromrichter umfassen mehrere Halbleiterschaltelemente mittels derer ein elektrischer Strom und/oder eine elektrische Spannung für die angeschlossene elektrische Maschine eingestellt werden kann. Hierbei werden die Schaltelemente beispielsweise mittels eines Pulsbreitenmodulationsverfahrens angesteuert. Übliche Modulationsverfahren sind beispielsweise Raumzeiger-Modulation, Sinusmodulation, oder Flat-Bottom. In der Regel werden dabei in einem Normalbetrieb alle Schaltelemente gleichmäßig angesteuert. Während des Betriebs ist dabei darauf zu achten, dass vorgegebene Grenzwerte für die Belastung der Schaltelemente, wie zum Beispiel eine maximale Temperatur oder ähnliches nicht überschritten werden.

### Offenbarung der Erfindung

Die vorliegende Erfindung offenbart ein Verfahren zur Ansteuerung eines Stromrichters mit den Merkmalen des Patentanspruchs 1, eine Steuervorrichtung für einen Stromrichter mit den Merkmalen des Patentanspruchs 5 6- und einen Stromrichter mit den Merkmalen des Patentanspruchs 7.

### Demgemäß ist vorgesehen:

Ein Verfahren zur Ansteuerung eines mehrphasigen pulsbreitenmodulierten elektrischen Stromrichters. Das Verfahren umfasst einen Schritt Ansteuern des Stromrichters mit einer ersten vorbestimmten Taktfrequenz in einem ersten Winkelbereich einer elektrischen Periode und einen Schritt zum Ansteuern des Stromrichters mit einer zweiten vorbestimmten Taktfrequenz in einem zweiten Winkelbereich der elektrischen Periode. Der erste Winkelbereich und der zweite Winkelbereich der elektrischen Periode können hierbei insbesondere Teilbereiche einer elektrischen Periode eines von dem Stromrichter auszugebenden Wechselstroms umfassen, und werden in Abhängigkeit von einer ermittelten Temperatur und/oder Temperaturverteilung in dem Stromrichter eingestellt.

### Weiterhin ist vorgesehen:

Eine Steuervorrichtung für einen mehrphasigen pulsbreitenmodulierten elektrischen Stromrichter. Die Steuervorrichtung umfasst eine Steuereinrichtung. Die Steuereinrichtung ist dazu ausgelegt, ein Steuersignal für eine pulsbreitenmodulierte Ansteuerung des Stromrichters bereitzustellen. Insbesondere ist die Steuereinrichtung dazu ausgelegt, das Ansteuersignal in einem ersten Winkelbereich einer elektrischen Periode in Abhängigkeit von einer ersten vorbestimmten Taktfrequenz bereitzustellen und in einem zweiten Winkelbereich der elektrischen Periode das Ansteuersignal in Abhängigkeit von einer zweiten vorbestimmten Taktfrequenz bereitzustellen. Der erste Winkelbereich und der zweite Winkelbereich der elektrischen Periode können hierbei insbesondere Teilbereiche einer elektrischen Periode eines von dem Stromrichter auszugebenden Wechselstroms umfassen, und werden in Abhängigkeit von einer ermittelten Temperatur und/oder Temperaturverteilung in dem Stromrichter eingestellt.

### Ferner ist vorgesehen:

Ein Stromrichter mit mehreren Halbbrücken und einer erfindungsgemäßen Steuervorrichtung. Jede der Halbbrücken des Stromrichters umfasst ein erstes Schaltelement und ein zweites Schaltelement. Die Steuereinrichtung ist dazu ausgelegt, die ersten Schaltelemente und die zweiten Schaltelemente der Halbbrücken mit dem bereitgestellten Steuersignal anzusteuern.

### Vorteile der Erfindung

Der vorliegenden Erfindung liegt die Erkenntnis zugrunde, dass für die Bauelemente eines Stromrichters, insbesondere für die dabei eingesetzten Schaltelemente jeweils Grenzwerte existieren, die während des Betriebs nicht überschritten werden dürfen. Diese Grenzwerte umfassen insbesondere auch eine maximale Betriebstemperatur oder einen maximal zulässigen Anstieg der Betriebstemperatur. Hierbei kann zum Beispiel ein absoluter oder relativer Anstieg der der Betriebstemperatur ausgewertet werden. Ferner kann als Grenzwert auch eine Temperaturdifferenz, beispielsweise eine Temperaturdifferenz zwischen einem Bauelement (z.B. einem Schaltelement) des Stromrichters und einem benachbarten Bauelement, wie zum Beispiel einer Kühleinrichtung oder einem Kühlmedium ausgewertet werden, wobei die Temperaturdifferenz möglichst einen vorgegebene Grenzwert nicht überschreiten sollte. Wird die maximale Betriebstemperatur oder Temperaturdifferenz dennoch überschritten, so besteht die Gefahr, dass die entsprechenden Bauteile beschädigt oder zerstört werden, oder zumindest eine vorzeitige Alterung auftritt. Wird an einem der Schaltelemente des Stromrichters eine Temperatur erreicht, welche im Bereich der maximalen Betriebstemperatur liegt, oder diese gegebenenfalls sogar überschreitet, so muss in der Regel die Leistung des Stromrichters reduziert werden, um eine Zerstörung oder vorzeitige Alterung zu vermeiden. Aufgrund des Aufbaus des Stromrichters und des angeschlossenen Kühlsystems kann es gegebenenfalls zu einer sehr unterschiedlichen Erwärmung in den einzelnen Schaltelementen kommen. Zum Schutz der Schaltelemente und des gesamten Stromrichters muss dabei die Leistung des Stromrichters bereits dann reduziert werden, wenn mindestens eines der Schaltelemente die vorgegebene maximale Betriebstemperatur erreicht oder gegebenenfalls überschreitet.

Es ist daher eine Idee der vorliegenden Erfindung, dieser Erkenntnis Rechnung zu tragen und eine Ansteuerung für einen Stromrichter zu schaffen, bei welchem eine Temperaturentwicklung in den einzelnen Komponenten, insbesondere den Schaltelementen des Stromrichters angeglichen werden kann. Auf diese Weise kann einer ungleichmäßigen Temperaturverteilung der Schaltelemente in dem Stromrichter entgegengewirkt werden. Beispielsweise kann durch eine geeignete Ansteuerung der einzelnen Schaltelemente einem lokalen Temperaturanstieg an einem oder mehreren Schaltelementen entgegengewirkt werden. Auf diese Weise kann der Stromrichter über einen weiteren Bereich hinweg mit der maximalen Leistung betrieben werden. Darüber hinaus kann auch einer vorzeitigen Alterung eines oder mehrerer Schaltelemente dadurch Rechnung getragen werden, dass ein eventuell stärker beanspruchtes oder bereits vorzeitig gealtertes Schaltelement in einem schonenderen Betriebsmodus, beispielsweise mit einer niedrigeren Betriebstemperatur, betrieben wird.

Durch das Ein- bzw. Ausschalten der Schaltelemente in dem elektrischen Stromrichter entstehen Schaltverluste. Somit führt eine pulsbreitenmodulierte Ansteuerung des Stromrichters mit einer hohen Taktfrequenz zu einem häufigen Ein- und Ausschalten der einzelnen Schaltelemente, was in der Folge auch zu hohen Schaltverlusten führt. Diese hohen Schaltverluste bewirken wiederum ein starkes Erwärmen der entsprechenden Schaltelemente. Andererseits kann durch eine hohe Taktrate bei der pulsbreitenmodulierten Ansteuerung des Stromrichters der auszugebende Strom oder die auszugebende Spannung sehr präzise eingestellt werden.

Durch das Anpassen der Taktfrequenz für die pulsbreitenmodulierte Ansteuerung der Schaltelemente in dem Stromrichter innerhalb einer Periode eines auszugebenden Wechselstroms oder einer auszugebenden Wechselspannung ist es somit möglich, einerseits den Strom- oder Spannungsverlauf für den auszugebenden Wechselstrom bzw. die auszugebende Wechselspannung sehr genau einzustellen. Darüber hinaus kann durch ein gezieltes Absenken der Taktfrequenz für die pulsbreitenmodulierte Ansteuerung in vorgegebenen Winkelbereichen der Periode eines auszugebenden Wechselstroms oder einer auszugebenden Wechselspannung gezielt einer lokalen Temperaturerhöhung an einem oder mehreren Schaltelementen in dem Stromrichter entgegengewirkt werden. Auf diese Weise kann die Temperaturverteilung in dem Stromrichter gezielt entsprechend von vorgegebenen Rahmenbedingungen eingestellt werden. Beispielsweise kann eine möglichst gleichmäßige Temperaturverteilung für alle Schaltelemente in dem Stromrichter erreicht werden. Alternativ ist es auch möglich, bewusst an einem oder mehreren Schaltelementen eine geringere Temperatur einzustellen. Somit können beispielsweise Vorschädigungen oder einer ungleichmäßigen Alterung der einzelnen Schaltelemente Rechnung getragen werden.

Gemäß Anspruch 1 umfasst das Verfahren zur Ansteuerung des Stromrichters einen Schritt zum Erfassen einer Temperatur und/oder einer Temperaturverteilung in dem Stromrichter, sowie einen Schritt zum Einstellen des ersten Winkelbereichs und des zweiten Winkelbereichs einer elektrischen Periode in Abhängigkeit von der ermittelten Temperatur und/oder der ermittelten Temperaturverteilung in dem Stromrichter. Auf diese Weise kann die Ansteuerung, insbesondere die Anpassung der Taktfrequenz in den einzelnen Winkelbereichen gezielt auf die Temperatur bzw. die Temperaturverteilung in dem Stromrichter angepasst werden.

Gemäß einer Ausführungsform ist die erste Taktfrequenz ein ganzzahliges Vielfaches der zweiten Taktfrequenz. Beispielsweise kann die erste Taktfrequenz doppelt so hoch gewählt werden wie die zweite Taktfrequenz. Durch ein ganzzahliges Verhältnis zwischen der ersten Taktfrequenz und der zweiten Taktfrequenz lassen sich die entsprechenden Taktfrequenzen besonders einfach voneinander ableiten.

Gemäß einer Ausführungsform umfasst der Schritt zum Erfassen der Temperatur und/oder der Temperaturverteilung eine sensorische Erfassung von mindestens einer Temperatur in dem Stromrichter. Insbesondere ist es auch möglich, die Temperatur jeder Halbbrücke oder an jedem Schaltelement des Stromrichters sensorisch zu erfassen. Auf diese Weise kann eine präzise Ermittlung der Temperatur bzw. der Temperaturverteilung in dem Stromrichter erreicht werden. Gemäß einer Ausführungsform umfasst das Erfassen der Temperatur und/oder der Temperaturverteilung in dem Stromrichter eine Berechnung einer Temperatur und/oder einer Temperaturverteilung. Durch das Berechnen der Temperatur bzw. der Temperaturverteilung in dem Stromrichter kann der Hardware-Aufwand, insbesondere der Aufwand an erforderlichen Temperatursensoren verringert werden. Dies führt zu einer weiteren Kostenreduktion. Insbesondere kann die Temperatur und/oder die Temperaturverteilung in dem Stromrichter in Abhängigkeit von zuvor definierten Modellen berechnet werden.

Gemäß Anspruch 5 umfasst die Steuervorrichtung eine Temperaturbestimmungseinrichtung. Die Temperaturbestimmungseinrichtung ist dazu ausgelegt, eine Temperatur und/oder eine Temperatur in dem Stromrichter zu ermitteln. Die Steuereinrichtung der Steuervorrichtung ist dazu ausgelegt, den ersten Winkelbereich und den zweiten Winkelbereich in Abhängigkeit von der ermittelten Temperatur und/oder der ermittelten Temperaturverteilung einzustellen. Auf diese Weise kann die Taktfrequenz in den einzelnen Winkelbereichen gezielt auf die Temperatur bzw. die Temperaturverteilung in dem Stromrichter angepasst werden.

Gemäß einer Ausführungsform umfasst die Steuervorrichtung einen Temperatursensor. Der Temperatursensor ist dazu ausgelegt, mindestens eine Temperatur in dem Stromrichter zu erfassen. Insbesondere kann der Temperatursensor auch die Temperatur in den einzelnen Halbbrücken oder an den einzelnen Stromrichtern der Halbbrücken individuell erfassen. Die Temperaturbestimmungseinrichtung ist hierbei dazu ausgelegt, die Temperatur und/oder die Temperaturverteilung in dem Stromrichter unter Verwendung der durch den Temperatursensor erfassten Temperatur zu ermitteln.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen und Ergänzungen zu den jeweiligen Grundformen der Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines elektrischen Antriebssystems mit einem Stromrichter gemäß einer Ausführungsform;
- Figur 2:: zeigt eine schematische Darstellung der Ströme eines dreiphasigen Stromrichters;
- Figur 3:: eine schematische Darstellung der Anpassung der Taktfrequenz gemäß einer Ausführungsform; und
- Figur 4:: eine schematische Darstellung eines Ablaufdiagramms, wie es einem Verfahren zur Ansteuerung eines mehrphasigen Stromrichters gemäß einer Ausführungsform zugrunde liegt.

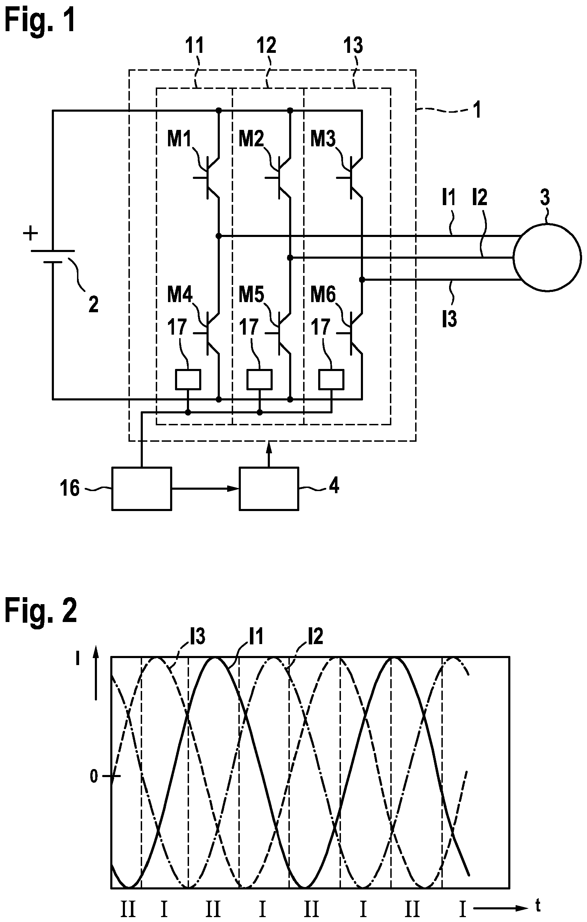

Figur 1 zeigt eine schematische Darstellung eines elektrischen Antriebssystems mit einem Stromrichter 1 gemäß einer Ausführungsform. Der Stromrichter wird eingangsseitig von einer elektrischen Energiequelle 2 gespeist. Beispielsweise kann es sich bei dieser elektrischen Energiequelle 2 um eine Batterie, insbesondere zum Beispiel um die Traktionsbatterie eines Elektro- oder Hybridfahrzeugs handeln. Ausgangsseitig ist der Stromrichter mit einer elektrischen Maschine 3 elektrisch gekoppelt. Der Stromrichter generiert aus der eingangsseitig bereitgestellten Spannung, hier beispielsweise einer Gleichspannung, eine mehrphasige Wechselspannung und stellt diese ausgangsseitig für die elektrische Maschine 3 bereit. Mit dem hier dargestellten Ausführungsbeispiel sowie der weiteren Beschreibung wird die elektrische Maschine 3 mittels einer dreiphasigen Wechselspannung angesteuert. Die vorliegende Erfindung ist jedoch nicht auf eine dreiphasige Wechselspannung begrenzt. Darüber hinaus kann der Stromrichter 1 auch eine beliebige mehrphasige Wechselspannung insbesondere eine Wechselspannung mit mehr als drei Phasen bereitstellen, um die elektrische Maschine 3 anzusteuern.

Der Stromrichter 1 umfasst in diesem Beispiel drei Halbbrücken 11, 12, 13 mit jeweils einem oberen Schaltelement M1 bis M3 und jeweils einem unteren Schaltelement M4 bis M6. Die Schaltelemente M1 bis M6 des Stromrichters 1 werden dabei von einer Steuervorrichtung 4 mittels geeigneter Steuersignale angesteuert, um aus einer Eingangsspannung die erforderliche mehrphasige Ausgangsspannung zu erzeugen und hierdurch einen mehrphasigen Wechselstrom einzuprägen. Hierzu können die einzelnen Schaltelemente M1 bis M6 der Halbbrücken 11 bis 13 beispielsweise von der Steuervorrichtung 4 mittels pulsbreitenmodulierten Signalen angesteuert werden. In einem konventionellen Betriebsmodus werden die einzelnen Schaltelemente M1 bis M6 der Halbbrücken 11 bis 13 dabei in der Regel gleichmäßig angesteuert, so dass ausgangsseitig eine dreiphasige Wechselspannung bzw. ein dreiphasiger Wechselstrom bereitgestellt wird.

Während des Betriebs des Stromrichters 1 werden sich die einzelnen Komponenten, insbesondere die Schaltelemente M1 bis M6 erwärmen. Um die dabei entstehende Wärme abzuführen, kann der Stromrichter 1 beispielsweise über eine Kühlvorrichtung (hier nicht dargestellt) die thermische Energie von den Schaltelementen M1 bis M6 abführen. Hierzu kann beispielsweise als Kühlmedium Luft oder eine Kühlflüssigkeit eingesetzt werden. Während das Kühlmedium an den einzelnen Schaltelementen M1 bis M6 vorbeiströmt, erwärmt sich das Kühlmedium. Strömt das Kühlmedium beispielsweise zunächst an den Schaltelementen M1 und M4 der ersten Halbbrücke 11 vorbei und anschließend an den Schaltelementen M2 und M5 der zweiten Halbbrücke 12 sowie schließlich an den Schaltelementen M3 und M6 der dritten Halbbrücke 13, so kann dies dazu führen, dass die Schaltelemente M1 und M4 der ersten Halbbrücke 11 stärker gekühlt werden als die weiteren Schaltelemente M2, M3, M5 und M6. Dies kann dazu führen, dass sich die weniger stark gekühlten Schaltelemente, insbesondere die Schaltelemente M3 und M6 der dritten Halbbrücke 13 stärker erwärmen. Die Steuervorrichtung 4 kann dabei die Taktfrequenz für die pulsbreitenmodulierte Ansteuerung der Schaltelemente M1 bis M6 während einer durch den Stromrichter 1 auszugebenden Wechselspannung in Abhängigkeit von den Temperaturen der einzelnen Halbbrücken 11 bis 13 oder der einzelnen Schaltelemente M1 bis M6 anpassen. So führen höhere Taktfrequenzen bei der pulsbreitenmodulierten Ansteuerung zu einer höheren Anzahl von Ein- und Ausschaltvorgängen und damit verbunden auch zu höheren Schaltverlusten. Durch Absenken der Taktfrequenz während der pulsbreitenmodulierten Ansteuerung des Stromrichters 1 kommt es somit zu geringeren Schaltverlusten. Geringere Schaltverluste bedeuten dabei auch eine geringere thermische Erwärmung.

Die Steuervorrichtung 4 kann die Temperaturverteilung in dem Stromrichter, insbesondere die Temperaturen in den einzelnen Halbbrücken 11 bis 13 oder an den einzelnen Schaltelementen M1 bis M6 ermitteln. Die Ermittlung der Temperaturverteilung und/oder der Temperaturen in dem Stromrichter 1 kann beispielsweise mittels einer Temperaturbestimmungseinrichtung 16 der Steuervorrichtung 4 erfolgen. Hierzu können beispielsweise mittels eines oder mehrerer Temperatursensoren 17 eine Temperatur in dem Stromrichter 1 oder individuell die Temperaturen in den einzelnen Halbbrücken 11 bis 13 oder an den Schaltelementen M1 bis M6 erfasst werden. Diese erfassten Temperaturen können mittels der Temperaturbestimmungseinrichtung 16 ausgewertet werden, um beispielsweise auf eine ungleiche Temperaturverteilung in dem Stromrichter 1 zu schließen. Insbesondere kann zum Beispiel ermittelt werden, ob sich die Temperatur in dem Stromrichter 1 in einer Halbbrücke 11 bis 13 oder an mindestens einem der Schaltelemente M1 bis M6 einer maximal zulässigen Betriebstemperatur annähert oder diese gegebenenfalls sogar überschreitet. Ferner ist es auch möglich, beispielsweise einen Temperaturunterschied zwischen dem Stromrichter 1, insbesondere in mindestens einer der Halbbrücken 11 bis 13 oder an mindestens einem der Schaltelemente M1 bis M6 einerseits und einer weiteren Temperatur an dem Stromrichter oder in der Umgebung des Stromrichters 1 zu überwachen. Gegebenenfalls kann die nachfolgend beschriebene Anpassung der Taktfrequenz für die pulsbreitenmodulierte Ansteuerung des Stromrichters 1 dabei auch auf Basis eines solchen Temperaturunterschieds angepasst werden.

Neben der sensorischen Erfassung der Temperatur in dem Stromrichter 1 ist es darüber hinaus auch möglich, die Temperatur in dem Stromrichter 1 bzw. die Temperaturverteilung in dem Stromrichter 1 unter Verwendung eines Modells zu berechnen. Hierzu können gegebenenfalls sensorisch erfasste Temperaturwerte mit in das Rechenmodell einfließen. Ferner ist es auch möglich, weitere Messwerte oder gegebenenfalls auch Sollwert-Vorgaben, beispielsweise von elektrischen Strömen in dem Stromrichter 1 mit in die Berechnung der Temperatur oder der Temperaturverteilung in dem Stromrichter 1 einfließen zu lassen.

Figur 2 zeigt eine schematische Darstellung eines Strom-Zeitdiagramms für die elektrischen Phasenströme eines dreiphasigen Wechselrichters. Die drei Phasen der Ströme weisen jeweils eine sinusförmige Stromverlauf auf, wobei die einzelnen Phasen jeweils 120° gegeneinander versetzt sind. Das hier dargestellte Ausführungsbeispiel mit einer dreiphasigen Wechselspannung mit den Strömen I1, I2 und l3 dient dabei lediglich dem besseren Verständnis und soll keine Beschränkung der vorliegenden Erfindung auf genau drei Phasen darstellen. Darüber hinaus sind auch beliebige weitere Stromrichter, insbesondere Wechselrichter mit einer von drei verschiedenen Anzahl von Phasen möglich.

Soll die thermische Belastung in einem Stromrichter 1 beispielsweise in einer der drei Halbbrücken 11-13 gegenüber den anderen Halbbrücken 11-13 verringert werden, so kann die Taktfrequenz für die pulsbreitenmodulierte Ansteuerung in denjenigen Winkelbereichen, in denen die entsprechende Halbbrücke einen besonders hohen Strom zu führen hat, abgesenkt werden. Beispielsweise kann die Taktfrequenz der pulsbreitenmodulierten Ansteuerung in einem vorgegebenen Winkelbereich vor und/oder nach dem Maximum des elektrischen Stroms durch die zu entlastende Halbbrücke abgesenkt werden. Werden dabei vor und nach dem Maximum des elektrischen Stroms jeweils gleich große Winkelbereiche in der Taktfrequenz abgesenkt, so werden die übrigen beiden Halbbrücken jeweils gleich stark belastet. Durch eine asymmetrische Absenkung der Taktfrequenz in Bezug auf das Maximum des elektrischen Stroms kann darüber hinaus auch eine asymmetrische Belastung der übrigen beiden Phasen erreicht werden.

In Figur 2 kann somit beispielsweise eine Entlastung der Schaltelemente M3 und M6 erreicht werden, indem die mit II gekennzeichneten Bereiche mit einer niedrigeren Taktfrequenz angesteuert werden, während die mit I gekennzeichneten Bereiche mit einer höheren Taktfrequenz angesteuert werden.

Beispielsweise kann die Taktfrequenz für die Bereiche II durch ein Teilen der Taktfrequenz in den Bereichen I mit einem ganzzahligen Faktor generiert werden. Somit kann beispielsweise aus der Taktfrequenz für die Bereiche I mittels eines entsprechenden Frequenzteilers auf einfache Weise die niedrigere Taktfrequenz für die Bereiche II generiert werden. Insbesondere kann beispielsweise durch eine einfache Halbierung der Taktfrequenz die Taktfrequenz für die Bereiche II sehr einfach aus der Taktfrequenz für die Bereiche I generiert werden. Darüber hinaus sind selbstverständlich auch beliebige weitere Möglichkeiten zur Erzeugung der einzelnen Taktfrequenzen für die Bereiche I und II möglich. Insbesondere ist es nicht zwingend erforderlich, dass die Taktfrequenz der Bereiche I ein ganzzahliges Vielfaches der Taktfrequenz für die Bereiche II ist.

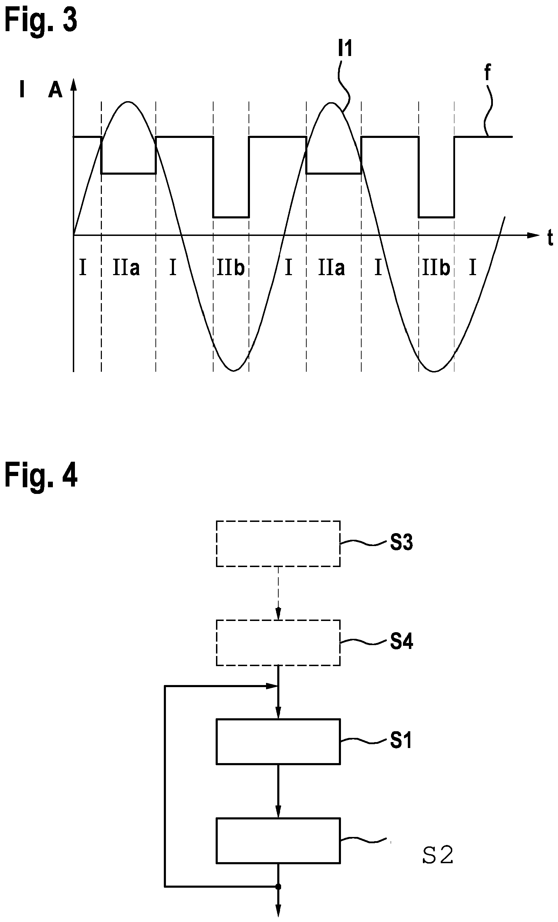

Ferner ist es auch nicht zwingend erforderlich, dass der Winkelbereich, in dem die Taktfrequenz während der oberen Halbwelle abgesenkt wird, einem Winkelbereich entspricht, in dem die Taktfrequenz während der unteren Halbwelle abgesenkt wird. Grundsätzlich ist es auch möglich, dass der Winkelbereich und/oder das Verhältnis zwischen ursprünglicher Taktfrequenz und abgesenkter Taktfrequenz für die obere Halbwelle und die untere Halbwelle verschieden sind. Dies ist beispielsweise in Figur 3 dargestellt.

Figur 3 zeigt eine schematische Darstellung eines Diagramms der Taktfrequenz während einer elektrischen Periode einer von dem elektrischen Stromrichter 1 zur elektrischen Maschine 3 zugeführten Wechselstroms. In diesem Fall ist zur besseren Anschauung lediglich der Strom I1 einer elektrischen Phase dargestellt. Wie in Figur 3 zu erkennen ist, erfolgt dabei während der oberen Halbwelle in einem Bereich IIa ein Absenken der ursprünglichen Taktfrequenz auf die Hälfte dieser ursprünglichen Taktfrequenz. Beispielsweise kann die Taktfrequenz von ursprünglich 10 kHz auf 5 kHz abgesenkt werden. Darüber hinaus sind selbstverständlich auch beliebige weitere Taktfrequenzen möglich. Im weiteren Verlauf, während der unteren Halbwelle des Stroms I1 wird in einem Winkelbereich IIb von kurz vor dem Minimum des Stroms I1 bis kurz nach dem Minimum des Stroms I1 die Taktfrequenz auf ein Drittel der ursprünglichen Taktfrequenz abgesenkt. Durch das stärkere Absenken der Taktfrequenz kann dabei auch eine stärkere Entlastung des entsprechenden Schaltelements M1 bis M6 erfolgen.

Wie darüber hinaus in Figur 3 ebenfalls zu erkennen ist, ist der Winkelbereich IIa, in dem die Taktfrequenz während der oberen Halbwelle abgesenkt wird, größer, als der Winkelbereich IIb, in dem die Taktfrequenz während der unteren Halbwelle abgesenkt wird. Auch hier dient die Kombination der unterschiedlichen Winkelbereiche für die Bereiche IIa und IIb, in denen die Taktfrequenz abgesenkt wird, sowie die unterschiedliche Absenkung der Taktfrequenzen nur der besseren Anschauung. Grundsätzlich ist es auch möglich, nur die Länge des Winkelbereichs, in dem die Taktfrequenz abgesenkt wird, für die obere Halbwelle und die untere Halbwelle individuell anzupassen.

Figur 4 zeigt eine schematische Darstellung eines Ablaufdiagramms, wie es einem Verfahren zur Ansteuerung eines pulsbreitenmodulierten elektrischen Stromrichters 1 gemäß einer Ausführungsform zugrunde liegt. In Schritt S1 wird dabei der Stromrichter 1 in einem ersten Winkelbereich einer elektrischen Periode mit einer ersten vorbestimmten Taktfrequenz angesteuert. In Schritt S2 wird der Stromrichter in einem zweiten Winkelbereich der elektrischen Periode mit einer zweiten vorbestimmten Taktfrequenz angesteuert. Insbesondere ist die zweite vorbestimmte Taktfrequenz kleiner als die erste vorbestimmte Taktfrequenz. In Schritt S3 wird eine Temperatur und/oder eine Temperaturverteilung in dem Stromrichter 1 erfasst. Daraufhin werden in Schritt S4 der erste Winkelbereich und/oder der zweite Winkelbereich der elektrischen Periode Abhängigkeit von der ermittelten Temperatur und/oder der ermittelten Temperaturverteilung in dem Stromrichter eingestellt. Darüber hinaus gelten für das hier beschriebene Verfahren auch sämtliche Ausführungen im Zusammenhang mit dem zuvor beschriebenen Stromrichter 1.

Zusammenfassend betrifft die vorliegende Erfindung eine Variation der Taktfrequenz für eine pulsbreitenmodulierte Ansteuerung eines elektrischen Stromrichters. Hierbei kann die Taktfrequenz in einem Winkelbereich einer elektrischen Periode eines auszugebenden Wechselstroms gezielt abgesenkt werden. Durch das Einstellen des ersten und zweiten Winkelbereichs in Abhängigkeit von der ermittelten Temperatur und/oder Temperaturverteilung in dem Stromrichter kann eine Anpassung der Belastung der Schaltelemente in dem Stromrichter erfolgen. Hierdurch ist es möglich, die Temperaturverteilung bzw. die thermische Belastung in dem Stromrichter anzupassen.

## Patentansprüche

1. Verfahren zur Ansteuerung eines pulsbreitenmodulierten elektrischen Stromrichters (1), mit den Schritten:
Ansteuern (S1) des Stromrichters (1) mit einer ersten vorbestimmten Taktfrequenz in einem ersten Winkelbereich (I) einer elektrischen Periode eines von dem Stromrichter (1) auszugebenden Stroms; und
Ansteuern (S2) des Stromrichters (1) mit einer zweiten vorbestimmten Taktfrequenz in einem zweiten Winkelbereich (II) der elektrischen Periode des von dem Stromrichter (1) auszugebenden Stroms,
**gekennzeichnet durch** die Schritte:
Erfassen (S3) einer Temperatur und/oder einer Temperaturverteilung in dem Stromrichter (1); und
Einstellen (S4) des ersten Winkelbereichs (1) und des zweiten Winkelbereichs (II) in Abhängigkeit von der ermittelten Temperatur und/oder Temperaturverteilung in dem Stromrichter (1).

2. Verfahren nach Anspruch 1, wobei die erste Taktfrequenz ein ganzzahliges Vielfaches der zweiten Taktfrequenz umfasst.

3. Verfahren nach einem der Ansprüche 1 oder 2, wobei das Erfassen (S3) der Temperatur und/oder der Temperaturverteilung eine sensorische Erfassung mindestens einer Temperatur in dem Stromrichter (1) umfasst.

4. Verfahren nach einem der Ansprüche 1 bis 3, wobei das Erfassen (S3) der Temperatur und/oder der Temperaturverteilung eine Berechnung einer Temperatur und/oder einer Temperaturverteilung umfasst.

5. Steuervorrichtung (4) für einen pulsbreitenmodulierten elektrischen Stromrichter (1), mit:
einer Steuereinrichtung (15), die dazu ausgelegt ist, ein Steuersignal für eine pulsbreitenmodulierte Ansteuerung des Stromrichters (1) bereitzustellen, wobei die Steuereinrichtung (15) dazu ausgelegt ist, das Ansteuersignal in einem ersten Winkelbereich (I) einer elektrischen Periode eines von dem Stromrichter (1) auszugebenden Stroms basierend auf einer ersten vorbestimmten Taktfrequenz bereitzustellen und in einem zweiten Winkelbereich (II) der elektrischen Periode des von dem Stromrichter (1) auszugebenden Stroms das Ansteuersignal basierend auf einer zweiten vorbestimmten Taktfrequenz bereitzustellen,
**gekennzeichnet durch**
eine Temperaturbestimmungseinrichtung (16), die dazu ausgelegt ist, eine Temperatur und/oder eine Temperaturverteilung in dem Stromrichter (1) zu ermitteln;
wobei die Steuereinrichtung (15) dazu ausgelegt ist, den ersten Winkelbereich (I) und den zweiten Winkelbereich (II) in Abhängigkeit von der ermittelten Temperatur und/oder Temperaturverteilung einzustellen.

6. Steuervorrichtung (4) nach Anspruch 5, mit einem Temperatursensor (17), der dazu ausgelegt ist, eine Temperatur in dem Stromrichter (1) zu erfassen,
wobei die Temperaturbestimmungseinrichtung (16) dazu ausgelegt ist, die Temperatur und/oder die Temperaturverteilung in dem Stromrichter unter Verwendung der erfassten Temperatur zu ermitteln.

7. Elektrischer Stromrichter (1), mit:
mehreren Halbbrücken (11-13), die jeweils ein erstes Schaltelement (M1 bis M3) und ein zweites Schaltelement (M4 bis M6) umfassen; und
einer Steuervorrichtung (4) nach einem der Ansprüche 5 oder 6,
wobei die Steuereinrichtung (4) dazu ausgelegt ist, die ersten Schaltelemente (M1 bis M3) und die zweiten Schaltelemente (M4 bis M6) der Halbbrücken (11-13) basierend auf dem bereitgestellten Steuersignal anzusteuern.

## Claims

1. Method for actuating a pulse-width-modulated electrical converter (1), comprising the following steps:
actuating (S1) the converter (1) at a first predetermined clock frequency in a first angle range (I) of an electrical period of a current to be output by the converter (1); and
actuating (S2) the converter (1) at a second predetermined clock frequency in a second angle range (II) of the electrical period of the current to be output by the converter (1),
**characterized by** the following steps:
detecting (S3) a temperature and/or a temperature distribution in the converter (1); and
setting (S4) the first angle range (I) and the second angle range (II) depending on the ascertained temperature and/or temperature distribution in the converter (1).

2. Method according to Claim 1, wherein the first clock frequency is an integer multiple of the second clock frequency.

3. Method according to either of Claims 1 and 2, wherein the detection (S3) of the temperature and/or the temperature distribution comprises sensory detection of at least one temperature in the converter (1).

4. Method according to one of Claims 1 to 3, wherein the detection (S3) of the temperature and/or the temperature distribution comprises calculation of a temperature and/or a temperature distribution.

5. Control apparatus (4) for a pulse-width-modulated electrical converter (1), comprising:
a control device (15), which is designed to provide a control signal for pulse-width-modulated actuation of the converter (1), wherein the control device (15) is designed to provide the actuation signal in a first angle range (I) of an electrical period of a current to be output by the converter (1) based on a first predetermined clock frequency and to provide the actuation signal in a second angle range (II) of the electrical period of the current to be output by the converter (1) based on a second predetermined clock frequency,
**characterized by**
a temperature determination device (16), which is designed to ascertain a temperature and/or a temperature distribution in the converter (1);
wherein the control device (15) is designed to set the first angle range (I) and the second angle range (II) depending on the ascertained temperature and/or temperature distribution.

6. Control apparatus (4) according to Claim 5, comprising a temperature sensor (17), which is designed to detect a temperature in the converter (1),
wherein the temperature determination device (16) is designed to ascertain the temperature and/or the temperature distribution in the converter using the detected temperature.

7. Electrical converter (1), comprising:
a plurality of half-bridges (11-13), which each comprise a first switching element (M1 to M3) and a second switching element (M4 to M6); and
a control apparatus (4) according to either of Claims 5 and 6,
wherein the control apparatus (4) is designed to actuate the first switching elements (M1 to M3) and the second switching elements (M4 to M6) of the half-bridges (11-13) based on the provided control signal.

## Revendications

1. Procédé permettant de piloter un convertisseur électrique (1) modulé en largeur d'impulsion, comprenant les étapes consistant à :
piloter (S1) le convertisseur (1) à une première fréquence d'horloge prédéterminée dans une première plage angulaire (I) d'une période électrique d'un courant à délivrer par le convertisseur (1) ; et
piloter (S2) le convertisseur (1) à une deuxième fréquence d'horloge prédéterminée dans une deuxième plage angulaire (II) de la période électrique du courant à délivrer par le convertisseur (1),
**caractérisé par** les étapes consistant à :
détecter (S3) une température et/ou une distribution de température dans le convertisseur (1) ; et
régler (S4) la première plage angulaire (1) et la deuxième plage angulaire (II) en fonction de la température et/ou de la distribution de température déterminées dans le convertisseur (1).

2. Procédé selon la revendication 1, dans lequel la première fréquence d'horloge comprend un multiple entier de la deuxième fréquence d'horloge.

3. Procédé selon l'une quelconque des revendications 1 et 2, dans lequel la détection (S3) de la température et/ou de la distribution de température comprend une détection par capteur d'au moins une température dans le convertisseur (1).

4. Procédé selon l'une quelconque des revendications 1 à 3, dans lequel la détection (S3) de la température et/ou de la distribution de température comprend un calcul d'une température et/ou d'une distribution de température.

5. Dispositif de commande (4) pour un convertisseur électrique (1) modulé en largeur d'impulsion, comprenant :
un dispositif de commande (15) qui est conçu pour fournir un signal de commande pour un pilotage modulé en largeur d'impulsion du convertisseur (1), le dispositif de commande (15) étant conçu pour fournir le signal de pilotage dans une première plage angulaire (I) d'une période électrique d'un courant à délivrer par le convertisseur (1) sur la base d'une première fréquence d'horloge prédéterminée et pour fournir dans une deuxième plage angulaire (II) de la période électrique du courant à délivrer par le convertisseur (1) le signal de pilotage sur la base d'une deuxième fréquence d'horloge prédéterminée,
**caractérisé par** un dispositif de détermination de température (16) qui est conçu pour déterminer une température et/ou une distribution de température dans le convertisseur (1) ;
le dispositif de commande (15) étant conçu pour régler la première plage angulaire (I) et la deuxième plage angulaire (II) en fonction de la température et/ou de la distribution de température déterminées.

6. Dispositif de commande (4) selon la revendication 5, comprenant un capteur de température (17) qui est conçu pour détecter une température dans le convertisseur (1),
le dispositif de détermination de température (16) étant conçu pour déterminer la température et/ou la distribution de température dans le convertisseur en utilisant la température détectée.

7. Convertisseur électrique (1), comprenant :
plusieurs demi-ponts (11 à 13) qui comprennent respectivement un premier élément de commutation (M1 à M3) et un deuxième élément de commutation (M4 à M6) ; et
un dispositif de commande (4) selon l'une quelconque des revendications 5 et 6, le dispositif de commande (4) étant conçu pour piloter les premiers éléments de commutation (M1 à M3) et les deuxièmes éléments de commutation (M4 à M6) des demi-ponts (11 à 13) sur la base du signal de commande fourni.
